# EUROPÄISCHE PATENTANMELDUNG

(11) **EP 2 428 311 A1**
(43) Veröffentlichungstag der Anmeldung: **14.03.2012**
(21) Anmeldenummer: 10176493.4
(22) Anmeldetag: 13.09.2010
(51) Int. Cl.: B23P 19/00, B65G 65/36

(54) **System zur Handhabung von Kleinteilen mit variierenden Geometrien**

(71) Anmelder: WESTCAM Projeckmanagement GmbH, 6068 Mils (AT)
(72) Erfinder: Mühlburger, Norbert, 6068, Mils (AT); Schennach, Oliver, 6414, Mieming (AT)
(74) Vertreter: Dilg, Haeusler, Schindelmann Patentanwaltsgesellschaft mbH

(57) **Zusammenfassung**

Die vorliegende Erfindung betrifft ein System zur Vereinzelung von Kleinteilen (120). Ein Deckel (106), welcher schwenkbar an einer Behälteröffnung (103) einer Behältervorrichtung (100) angeordnet ist, weist eine Auflagefläche (108) mit beabstandeten Befestigungsbereichen auf. Durch Schwenken der Behältervorrichtung (100) liegen die Kleinteile (120) auf der Auflagefläche (108) auf. Auf den Befestigungsbereichen aufliegende Kleinteile (120) sind an der Auflagefläche (108) lösbar befestigbar. Der Deckel (106) ist derart eingerichtet, dass, wenn sich der Deckel (106) in einer zweiten Position befindet, in welcher die Behälteröffnung (103) geöffnet ist, zumindest eines der Kleinteile (120) mittels einer Aufnahmevorrichtung von der Auflagefläche (108) aufnehmbar ist.

## Beschreibung

### Technisches Gebiet

Die vorliegende Erfindung betrifft ein System zur Handhabung von Kleinteilen sowie ein Verfahren zum Handhaben von Kleinteilen.

### Hintergrund der Erfindung

Es besteht häufig eine Notwendigkeit, aus einer Vielzahl von Kleinteilen einzelne Kleinteile zum Sortieren, zum Zählen oder zum Weiterverarbeiten herauszugreifen.

EP 1 947 036 A1 offenbart eine Vereinzelungseinrichtung für Kleinteile. Die Vereinzelungseinrichtung weist Aufstoßelemente auf und einen Behälter, in welchem als Schüttgut geeignete Kleinteile gelagert werden. Das Aufstoßelement stößt durch den Behälter von unten hindurch, so dass auf einer Stirnfläche des Aufstoßelements nach dem Durchstoßen eine gewisse Menge an Kleinteilen aufliegt. Aus dieser kleineren Menge von Kleinteilen auf der Stirnfläche kann mittels einer Greifvorrichtung ein Kleinteil entnommen werden.

EP 0 916 457 A2 offenbart eine flexible Zuführeinheit für Kleinteile. Eine Auflagefläche für die Kleinteile besteht aus einer flexiblen Membran, welche in Schwingung versetzt werden kann. Aufgrund der Schwingung werden die Positionen der Kleinteile auf der Auflagefläche geändert, bis eine gewünschte Lage zumindest eines Kleinteils vorliegt.

DE 38 22 756 A1 offenbart eine flexible Teilebereitstelleinheit, bei welcher verschiedene Kleinteile ähnlicher Dimension durch eine universell anwendbare Einrichtung in eine Halbordnung gebracht werden können, von welcher sie durch einen sensorgeführten Industrieroboter definiert gegriffen werden können. Ein Hubstempel wird durch einen Behälter, in welchem die Kleinteile aufbewahrt werden, durchstoßen, so dass auf der Stempeloberfläche des Hubstempels eine gewisse Anzahl von Kleinteilen in einer willkürlichen Lage zum Liegen kommt. In dieser Position werden die Lagen der Kleinteile von einer Kamera erfasst und Bildsignale ausgewertet. Die Bildsignale werden von einer Steuereinheit verarbeitet und daraufhin der Roboter gesteuert, um gezielt bestimmte Kleinteile von der Stempeloberfläche des Hubstempels zu entnehmen.

Auf Stirnfläche von Hubstempeln kommen allerdings nur wenige Kleinteile zum Liegen, so dass die Wahrscheinlichkeit, dass ein Kleinteil in einer gewünschten Greiflage zum Liegen kommt, eher gering ist. Gleichzeitig sind komplexere Vorrichtungen mit einer Vielzahl von Komponenten, wie beispielsweise einer Vielzahl von Motoren, notwendig, so dass Vereinzelungsvorrichtungen eine hohe Komplexität aufweisen.

### Darstellung der Erfindung

Es ist eine Aufgabe der vorliegenden Erfindung, eine kostengünstige und effektive Vereinzelungsvorrichtung zum Vereinzeln von Kleinteilen zu schaffen.

Die Aufgabe wird durch ein System zur Handhabung von Kleinteilen sowie durch ein Verfahren zum Handhaben von Kleinteilen gemäß den unabhängigen Patentansprüchen gelöst.

Gemäß einer ersten beispielhaften Ausführungsform der vorliegenden Erfindung wird ein System zur Handhabung (Vereinzelung) von Kleinteilen geschaffen. Das System weist eine Behältervorrichtung mit einer Behälteröffnung und einen Deckel auf. Die Behältervorrichtung ist derart um eine erste Drehachse schwenkbar z.B. an einem Träger angeordnet, dass die Behältervorrichtung aus einer Grundstellung, in welcher die Kleinteile in der Behältervorrichtung aufgenommen sind, in eine Schwenkstellung, in welcher die Kleinteile aus der Behälteröffnung herausfallen, schwenkbar ist. Der Deckel ist um eine zweite Drehachse schwenkbar an der Behältervorrichtung angeordnet, wobei der Deckel zwischen einer ersten Position, in welcher der Deckel die Behälteröffnung schließt, und einer zweiten Position, in welcher die Behälteröffnung geöffnet ist, schwenkbar. Der Deckel weist eine Auflagefläche mit beabstandeten Befestigungsbereichen auf, wobei ein auf einem jeweiligen Befestigungsbereich aufliegendes Kleinteil in der Grundstellung und in der Schwenkstellung der Behältervorrichtung lösbar befestigbar ist. Der Deckel ist derart eingerichtet, dass, wenn sich die Behältervorrichtung in der Grundstellung befindet und der Deckel sich in der zweiten Position befindet, mittels einer Aufnahmevorrichtung, wie z.B. einer Saugvorrichtung oder einer Greifvorrichtung, zumindest eines der Kleinteile von der Auflagefläche aufnehmbar ist.

Gemäß einer weiteren beispielhaften Ausführungsform wird ein Verfahren zum Handhaben (Vereinzeln) von Kleinteilen geschaffen. Zunächst wird eine Behältervorrichtung, welche um eine erste Drehachse schwenkbar z.B. an einem Träger angeordnet ist, aus einer Grundstellung, in welcher die Kleinteile in der Behältervorrichtung aufgenommen sind, in eine Schwenkstellung, in welcher die Kleinteile aus der Behälteröffnung herausfallen, geschwenkt. Ferner wird ein Deckel, welcher um eine zweite Drehachse schwenkbar an der Behältervorrichtung angeordnet ist, in eine erste Position, in welcher die Behälteröffnung geschlossen ist, und in eine zweite Position, in welcher die Behältervorrichtung an der Behälteröffnung geöffnet ist, geschwenkt.

Wenn sich die Behältervorrichtung in der Schwenkstellung und der Deckel in der ersten Position befinden, liegen die Kleinteile auf einer Auflagefläche des Deckels auf. An jeweiligen Befestigungsbereichen der Auflageflächen werden die auf den jeweiligen Befestigungsbereichen aufliegenden Kleinteile in der Grundstellung und in der Schwenkstellung der Behältervorrichtung befestigt. Wenn sich die Behältervorrichtung in Grundstellung und der Deckel in der zweiten Position befinden, kann zumindest eines der Kleinteile mittels einer Aufnahmevorrichtung von der Auflagefläche gegriffen werden.

Als Kleinteile können Teile beschrieben werden, welche sich beispielsweise als Schüttgut eignen und in großen Behältern in großen Mengen vorliegen können. Die Kleinteile können beispielsweise Pillen, Schrauben, Saatgut oder Prothesezähne sein. Dabei können die Kleinteile auch komplexe Geometrien aufweisen. Kleinteile im Rahmen der Anmeldung weisen z.B. einen größten Durchmesser auf, welcher beispielsweise Werte von ungefähr 0,1 cm (Zentimeter) bis ungefähr 1 m (Meter), bevorzugt ungefähr 0,5 cm (Zentimeter) bis ungefähr 10 cm (Zentimeter), einnehmen kann.

Die Behältervorrichtung weist eine Öffnung auf, durch welche die Kleinteile eingefüllt und ebenso herausgeschüttet werden können. Die Behältervorrichtung ist an einem Träger schwenkbar angebracht. In einer Grundstellung ruhen die Kleinteile beispielsweise auf dem Behälterboden und sind in der Behältervorrichtung aufgenommen. In Grundstellung können sich die Kleinteile ebenfalls z.B. durch Vibrationen bewegen, sofern sie die Behältervorrichtung nicht in Richtung Auflagefläche verlassen. In der Schwenkstellung fallen die Kleinteile aus der Behälteröffnung in Richtung Auflagefläche aus der Behältervorrichtung heraus.

Der Deckel ist um eine zweite Drehachse schwenkbar an der Behältervorrichtung angeordnet, so dass der Deckel in der ersten Position die Behälteröffnung verschließt und in der zweiten Position die Behälteröffnung öffnet. Der Deckel kann unabhängig von der Lage der Behältervorrichtung um die zweite Drehachse relativ zu der Behältervorrichtung geschwenkt werden. Die Auflagefläche ist derart am Deckel ausgebildet, dass eine Normale der Auflagefläche in der ersten Position des Deckels in den Innenraum der Behältervorrichtung zeigt und in der zweiten Position z.B. an dem Innenraum vorbei zeigt. In der zweiten Position des Deckels ist die Auflagefläche für die Aufnahmevorrichtung von außerhalb der Behältervorrichtung zugänglich.

In der zweiten Position nimmt der Deckel insbesondere eine vorbestimmte Lage ein, bei welcher der Deckel mit der Auflagefläche derart positioniert ist, dass die Aufnahmevorrichtung von der Auflagefläche des Deckels aufliegende Kleinteile gezielt greifen und abnehmen kann. Mit anderen Worten ist die Auflagefläche in einem Arbeitsfeld der Aufnahmevorrichtung positioniert, wenn sich der Deckel in der zweiten Position befindet.

Mit dem oben beschriebenen System und mit dem Verfahren zur Handhabung von Kleinteilen wird ein effizientes Vereinzelungssystem geschaffen. Kleinteile, welche als Schüttgut in einer Behältervorrichtung vorliegen, können mit dem System zunächst in einer kleineren Menge auf der Auflagefläche des Deckels isoliert werden. In einem anschließenden Schritt werden gezielt einzelne Kleinteile von der Auflagefläche aufgegriffen. Mittels des Systems kann zunächst die Behältervorrichtung mit dem Deckel verschlossen werden (Behältervorrichtung in Grundstellung, Deckel in erster Position). Anschließend kann die Behältervorrichtung um die erste Drehachse geschwenkt werden, so dass die Behältervorrichtung in Schwenkstellung und der Deckel sich noch in der ersten Position befinden. In diesem Zustand fallen die Kleinteile auf die Auflagefläche des Deckels. An den Befestigungsbereichen können beispielsweise mittels Luftabsaugung oder anderer Hafttechniken (Klettverschluss, Haftkleber) die Kleinteile an der Auflagefläche lösbar befestigt werden. Nun kann die Behältervorrichtung zurück in die Grundstellung geschwenkt werden, so dass alle nicht an den Befestigungsbereichen haftenden Kleinteile zurück in die Behältervorrichtung fallen, Alle an den Befestigungsbereichen haftenden Kleinteile verharren auf der Auflagefläche. Anschließend oder gleichzeitig kann der Deckel in die zweite Position geschwenkt werden, wobei die Kleinteile weiter an der Auflagefläche befestigt sind. In dieser zweiten Position nimmt der Deckel eine vordefinierte Position ein, bei welcher eine Aufnahmevorrichtung die Kleinteile von der Auflagefläche aufnehmen und abführen kann.

Bei diesem oben beschriebenen System zur Handhabung von Kleinteilen wird eine großflächige Auflagefläche für die Kleinteile geschaffen, da insbesondere die gesamte Deckelfläche als Auflagefläche verwendbar ist. Daher können auch eine Vielzahl von Befestigungsbereichen auf der Auflagefläche angeordnet werden, so dass bei einem einzigen Kippvorgang der Behältervorrichtung eine Vielzahl von Kleinteilen an den Befestigungsbereichen der Behältervorrichtung befestigbar ist. Da statistisch gesehen nur ein begrenzter Anteil der aufzunehmenden Kleinteile in einer aufnehmbaren Position zum Liegen kommt, wird aufgrund der Erhöhung der Anzahl von auf der Auflagefläche aufliegenden Kleinteilen ebenfalls die Wahrscheinlichkeit erhöht, dass eines der Kleinteile aufnehmbar bzw, greifbar zum Liegen kommt. Somit wird die Effizienz des Vereinzelungssystems erhöht.

Insbesondere zeichnet sich das oben beschriebene Handhabungssystem durch eine einfache Ausgestaltung aus, bei welchem wenige Komponenten notwendig sind. Es ist lediglich eine schwenkbar angeordnete Behältervorrichtung mit einem schwenkbar angeordneten Deckel nebst Antrieben notwendig.

Gemäß einer weiteren beispielhaften Ausführungsform ist der Deckel derart eingerichtet, dass, wenn sich die Behältervorrichtung in der Schwenkstellung und der Deckel in der ersten Position befinden, die Kleinteile auf der Auflagefläche aufliegen. Ferner ist der Deckel derart eingerichtet, dass, wenn sich die Behältervorrichtung in Grundstellung und der Deckel in der ersten Position befinden, die Kleinteile auf der Auflagefläche in den Befestigungsbereichen befestigbar sind. Mit anderen Worten weisen die Befestigungsbereiche derart starke Haltekräfte auf, dass, selbst wenn die Normale der Auflagefläche in Richtung Boden zeigt, die Kleinteile (über Kopf) auf der Auflagefläche gehalten werden.

Gemäß einer weiteren beispielhaften Ausführungsform weist jeder der Befestigungsbereiche zumindest eine Bohrung auf. An der Bohrung ist Luft von der Auflagefläche derart absaugbar, dass auf der Auflagefläche aufliegende Kleinteile in der Grundstellung und in der Schwenkstellung der Behältervorrichtung mittels Luftabsaugung (lösbar) befestigbar sind. Mittels der Luftabsaugung können Kleinteile schonend an der Auflagefläche befestigt werden. Ferner kann mittels der Luftabsaugung gezielt eine temporäre, lösbare Befestigung der Kleinteile auf der Auflagefläche erzielt werden. Dabei wird Luft von der Auflagefläche in Richtung des Körperinneren des Deckels abgesaugt, so dass die Kleinteile haftend an der Außenseite der Auflagefläche befestigt werden.

Gemäß einer weiteren beispielhaften Ausführungsform weist der Deckel ein Anschlusselement auf. Der Deckel ist derart ausgebildet, dass eine Fluidverbindung zwischen der Auflagefläche bzw. den Befestigungsbereichen (Bohrungen) und dem Anschlusselement geschaffen ist. An dem Anschlusselement ist eine Luftabsaugvorrichtung anschließbar. Beispielsweise kann eine Rohrverbindung zwischen den Befestigungsbereichen der Auflagefläche und dem Anschlusselement geschaffen werden, damit die Fluidverbindung herstellbar ist. Das Anschlusselement kann standardisiert sein, so dass mit genormten Anschlussvorrichtungen eine herkömmliche Luftabsaugvorrichtung anschließbar ist.

Gemäß einer weiteren beispielhaften Ausführungsform weist der Deckel einen Hohlraum auf, wobei der Deckel derart ausgebildet ist, dass über den Hohlraum die Fluidverbindung zwischen der Auflagefläche bzw. den Befestigungsbereichen (Bohrungen) und dem Anschlusselement erzeugbar ist. Die Bohrungen in der Auflagefläche bilden somit eine Fluidverbindung zwischen dem Hohlraum und der Umgebung der Auflagefläche, so dass bei Absaugung von Luft aus der Umgebung in den Hohlraum ein Sog erzeugt wird, welcher die Kleinteile an der Auflagefläche haftend befestigt.

Gemäß einer weiteren beispielhaften Ausführungsform weist der Deckel eine erste Abdeckung auf, welche die Auflagefläche enthält. Ferner weist der Deckel eine zweite Abdeckung auf, wobei die erste Abdeckung und die zweite Abdeckung derart angeordnet sind, dass der Hohlraum zwischen der ersten Abdeckung und der zweiten Abdeckung gebildet wird.

Gemäß einer weiteren beispielhaften Ausführungsform sind die erste Abdeckung und/oder die zweite Abdeckung zumindest teilweise transparent ausgebildet. Als transparentes Material für den Deckel bzw. für die erste Abdeckung und die zweite Abdeckung kann beispielsweise Plexiglas verwendet werden.

Mittels einer transparenten Ausbildung der ersten und/oder zweiten Abbildung kann beispielsweise eine einfachere Anbringung eines Beleuchtungsmittels und/oder einer Kamera erfolgen. So kann beispielsweise in dem Hohlraum oder unter der ersten Abdeckung bzw. auf der gegenüberliegenden Oberfläche der Auflagefläche eine Lampe der Beleuchtungsvorrichtung angebracht werden, um die Auflagefläche zu beleuchten. Ferner kann in dem Hohlraum eine Kamera eingerichtet sein, welche "von unten", das heißt von dem Hohlraum auf die Auflagefläche von innen her blickend, ein Bild der Auflagefläche einschließlich der Kleinteile aufnimmt.

Gemäß einer weiteren beispielhaften Ausführungsform sind die Bohrungen in den Befestigungsbereichen der Auflagefläche derart angeordnet, dass ein Abstand zwischen den Bohrungen entlang der Auflagefläche mindestens doppelt so groß wie der größte Durchmesser der Kleinteile ist. Somit wird sichergestellt, dass in einem Befestigungsbereich lediglich ein Kleinteil gehalten bzw. befestigt wird. Ein gegenseitiges Berühren der Kleinteile sowie ein gegenseitiges Aneinanderreiben der Kleinteile werden dadurch verhindert, so dass die Gefahr eines Defekts der Kleinteile verringert wird.

Gemäß einer weiteren beispielhaften Ausführungsform weist das System eine Steuereinheit auf. Die Steuereinheit ist derart ausgebildet, dass basierend auf Bilddaten eines Bildes der Auflagefläche mit den darauf liegenden Kleinteilen eine Umrisserkennung der Kleinteile durchführbar ist, so dass Lagedaten und Formdaten jedes einzelnen Kleinteils, welches auf der Auflagefläche aufliegt (insbesondere wenn sich der Deckel in der zweiten Position befindet), generierbar sind. Die Lagedaten beschreiben die Ausrichtung jedes einzelnen Kleinteils auf der Auflagefläche. Die Formdaten beschreiben einen Umriss und/oder ein dreidimensionales Profil eines Kleinteils. Ausgehend von diesen Daten kann die Aufnahmevorrichtung ein vorbestimmtes Kleinteil von der Auflagefläche aufnehmen.

Gemäß einer weiteren beispielhaften Ausführungsform ist die Steuereinheit ausgebildet, basierend auf den Lagedaten und Formdaten der Kleinteile, die Aufnahmevorrichtung derart zu steuern, dass die Aufnahmevorrichtung ein bestimmtes, auf der Auflagefläche liegendes Kleinteil aufnimmt. Dabei ist die Steuereinheit mit der Aufnahmevorrichtung derart koppelbar, dass Steuerdaten von der Steuereinheit auf die Aufnahmevorrichtung übertragbar sind.

Gemäß einer weiteren beispielhaften Ausführungsform weist das System eine Kamera auf. Die Kamera ist derart angeordnet, dass das Bild der Auflagefläche mit den darauf liegenden Kleinteilen erzeugbar ist. Die Kamera ist mit der Steuervorrichtung derart gekoppelt, dass das Bild von der Kamera an die Steuervorrichtung übertragbar ist. Die Kamera kann beispielsweise über der Auflagefläche angeordnet sein und von oben ein Bild der Auflagefläche aufnehmen. In dem Fall, dass die Auflagefläche durch eine erste transparente Abdeckung gebildet wird, kann die Kamera auch im Deckelinneren bzw. im Hohlraum angeordnet sein und durch die erste Abdeckung von innen heraus eine Aufnahme der Auflagefläche einschließlich der darauf aufliegenden Kleinteile aufnehmen. In dem Fall, dass die zweite Abdeckung ebenfalls transparent ausgebildet ist, kann die Kamera außerhalb des Deckels angeordnet sein und durch die zweite Abdeckung und durch die erste Abdeckung hindurch ein Bild von der Auflagefläche einschließlich der aufliegenden Kleinteile aufnehmen.

Gemäß einer weiteren beispielhaften Ausführungsform weist das System ferner eine Beleuchtungsvorrichtung auf, welche eingerichtet ist, die Auflagefläche zu beleuchten. Die Beleuchtung der Auflagefläche führt zu einem qualitativ besseren Bild der Auflagefläche einschließlich der aufliegenden Kleinteile. Darüber hinaus werden aufgrund der Beleuchtung der Auflagefläche Störeinflüsse von Fremdlichtquellen reduziert. Aufgrund der Beleuchtungsvorrichtung werden insbesondere die Umrisse der Kleinteile schärfer und kontrastreicher hervorgehoben. Im Falle, dass die Auflagefläche bzw. das erste Abdeckelement transparent ausgebildet ist, kann die Beleuchtungsvorrichtung unterhalb bzw. in dem Hohlraum des Deckels angeordnet sein.

Gemäß einer weiteren beispielhaften Ausführungsform weist die Behältervorrichtung eine Belüftungsvorrichtung auf. Durch die Belüftungsöffnung kann sichergestellt werden, dass beispielsweise im Falle einer Befestigung der Kleinteile mittels Luftabsaugung kein Unterdruck innerhalb der Behältervorrichtung entsteht, wenn sich der Deckel in der ersten Position befindet.

Gemäß einer weiteren beispielhaften Ausführungsform der Erfindung weist das System einen ersten Antrieb zum Schwenken des Behälters um die erste Drehachse auf. Zusätzlich oder alternativ kann das System in einer weiteren beispielhaften Ausführungsform einen zweiten Antrieb aufweisen, welcher zum Schwenken des Deckels um die zweite Drehachse eingerichtet ist. Der erste Antrieb und/oder der zweite Antrieb können elektrische Servomotoren oder pneumatisch angetriebene Motoren sein. Ferner besteht ebenfalls die Möglichkeit, einen hydraulischen Antrieb als ersten Antrieb oder als zweiten Antrieb einzusetzen.

Gemäß einer weiteren beispielhaften Ausführungsform weist das System ferner eine Führungsschiene auf, entlang welcher die Behältervorrichtung verschieblich angeordnet ist. Die Behältervorrichtung kann direkt mit der Führungsschiene verschieblich gekoppelt sein oder über den Träger verschieblich gekoppelt sein.

Gemäß einer weiteren beispielhaften Ausführungsform sind die Führungsschiene und die Behältervorrichtung lösbar verbunden, Beispielsweise kann somit flexibel eine weitere Behältervorrichtung mit gleichen oder unterschiedlichen Kleinteilen an ein- und dieselbe Führungsschiene angeordnet werden. Mit diesem austauschbaren Behältervorrichtungssystem kann flexibel ein schneller Austausch der zu vereinzelnden Kleinteile bzw. der Behältervorrichtung bereitgestellt werden. Die Rüstzeiten des Systems werden damit verringert.

Gemäß einer weiteren beispielhaften Ausführungsform weist das System ferner die Aufnahmevorrichtung auf, wobei die Aufnahmevorrichtung relativ zu der Behältervorrichtung verfahrbar angeordnet ist. Insbesondere kann die Aufnahmevorrichtung relativ zu der Führungsschiene verfahrbar angeordnet sein.

Alternativ dazu kann die Aufnahmevorrichtung unverfahrbar in dem System eingerichtet sein, wobei durch Verfahren der Behältervorrichtung entlang der Führungsschiene ein gewünschter Bereich der Auflagefläche in das Arbeitsfeld bzw. in den Aufnahmebereich der Aufnahmevorrichtung bzw. dem Greifbereich der Greifvorrichtung bewegbar ist.

Die Aufnahmevorrichtung weist beispielsweise einen oder eine Vielzahl von Roboterarmen mit jeweils einem geeignet Aufnahmewerkzeug auf. Das Aufnahmewerkzeug kann beispielsweise aus einem Greifwerkzeug, einer Absaugeinheit oder einer magnetische Aufnahmeeinheit für die Kleinteile bestehen.

Gemäß einer weiteren beispielhaften Ausführungsform weist die Behältervorrichtung einen Behälter und eine Behälterhalterung auf. Die Behälterhalterung ist eingerichtet, den Behälter lösbar zu halten. Die Behälterhalterung ist um die erste Drehachse schwenkbar mit dem Träger angeordnet. Der Behälter kann beispielsweise getrennt von dem Vereinzelungssystem mit Kleinteilen befüllt werden und individuell in einfacher Art und Weise mit der Behälterhalterung verbunden werden. Zur Befestigung zwischen Behälter und Behälterhalterung ist beispielsweise eine Schwalbenschwanzverbindung einsetzbar, mit welcher der Behälter auf die Behälterhalterung aufschiebbar ist. Ferner können andere flexible und lösbare Fixierungs- und Halterungsmechanismen, wie beispielsweise eine Klemmverbindung, eine Schraubverbindung oder eine Klettverbindung eingesetzt werden, um den Behälter an der Behälterhalterung lösbar zu befestigen.

Gemäß einer weiteren beispielhaften Ausführungsform weist der Behälter zumindest eine erste Kammer und eine weitere Kammer auf. Die erste Kammer und die weitere Kammer sind derart ausgebildet, dass in der ersten Kammer erste Kleinteile und in der weiteren Kammer zweite Kleinteile getrennt voneinander lagerbar sind. Durch Schwenken des Behälters in die Schwenkstellung fallen erste Kleinteile aus der ersten Kammer auf einen ersten Bereich der Auflagefläche und die zweiten Kleinteile der weiteren Kammer auf einen zweiten Auflagebereich der Auflagefläche. Mittels der gemeinsamen Aufnahmevorrichtung oder mittels ersten und zweiten Aufnahmevorrichtungen, können jeweils die ersten Kleinteile und/oder die zweiten Kleinteile von dem jeweiligen ersten und/oder Auflagebereich der Auflagefläche aufgenommen werden.

Mittels des Behälters mit einer Vielzahl von Kammern, welcher lösbar mit der Behälterhalterung befestigbar ist, wird ein magazinbasiertes Austauschsystem geschaffen werden. Sind beispielsweise die ersten Kleinteile und/oder die zweiten Kleinteile in der ersten Kammer und/oder der weiteren Kammer verbraucht bzw. bereits vereinzelt, so kann der Behälter mit den Kammern in einfacher Art und Weise von der Halterung gelöst werden und durch einen anderen mit Kleinteilen befüllten Behälter ersetzt werden. Dadurch entstehen nur kurze Rüstzeiten und das Handhabungssystem kann mit einer nur geringeren Verzögerung weiterarbeiten. Somit wird das Handhabungssystem effizienter.

Gemäß einer weiteren beispielhaften Ausführungsform weist das System eine Trennwand auf, welche zwischen der ersten Kammer und der weiteren Kammer angeordnet ist. Die Trennwand ist derart eingerichtet, dass bei Schwenken des Behälters (z.B. von der Schwenkstellung in die Grundstellung) und/oder des Deckels (z.B. von der zweiten in die erste Position) ein auf der Auflagefläche liegendes erstes Kleinteil in die erste Kammer fällt und ein auf der zweiten Auflagefläche liegendes zweites Kleinteil in die weitere Kammer fällt. Mittels der Trennwand wird sichergestellt, dass es bei Verschwenken des Deckels und/oder des Behälters nicht zu einer Vermischung der ersten und zweiten Kleinteile kommt.

Gemäß einer weiteren beispielhaften Ausführungsform weist das System eine weitere Behältervorrichtung mit einer weiteren Behälteröffnung auf. Die weitere Behälteröffnung ist derart um eine weitere erste Drehachse schwenkbar an dem Träger angeordnet, dass die weitere Behälteröffnung aus einer weiteren Grundstellung, in welcher die Kleinteile in der Behältervorrichtung aufgenommen sind, in eine weitere Schwenkstellung, in welcher die Kleinteile aus der Behälteröffnung herausfallen, schwenkbar. Ferner weist das System einen weiteren Deckel auf, welcher um eine zweite Drehachse schwenkbar an der weiteren Behältervorrichtung angeordnet ist. Der Deckel ist zwischen einer weiteren ersten Position, in welcher der Deckel die weitere Behälteröffnung schließt und einer weiteren zweiten Position, in welcher die weitere Behälteröffnung geöffnet ist, schwenkbar. Der weitere Deckel weist eine weitere Auflagefläche mit beabstandeten weiteren Befestigungsbereichen auf, wobei ein auf einem jeweiligen weiteren Befestigungsbereich aufliegendes Kleinteil in der weiteren Grundstellung und in der weiteren Schwenkstellung der weiteren Bellältervorrichtung (lösbar) befestigbar ist. Der weitere Deckel ist derart eingerichtet, dass, wenn sich die Behälteröffnung in der weiteren Grundstellung und der weitere Deckel in der weiteren zweiten Position befinden, mittels einer Aufnahmevorrichtung und/oder einer weiteren Aufnahmevorrichtung zumindest eines der Kleinteile von der weiteren Auflagefläche aufnehmbar ist.

Die weitere Behältervorrichtung kann sich unabhängig zur Behältervorrichtung drehen, so dass individuell entweder die Behältervorrichtung oder die weitere Behältervorrichtung in Grundstellung bzw. in Schwenkstellung geschwenkt werden kann. Die Behältervorrichtung und die weitere Behältervorrichtung können beispielsweise an der Führungsschiene verschieblich angeordnet werden, so dass zunächst Kleinteile der einen Behältervorrichtung vereinzelt werden, danach die Behältervorrichtungen weiter entlang der Führungsschiene verschoben werden und anschließend Kleinteile aus der weiteren Behältervorrichtung vereinzelt werden.

Die Kamera kann beispielsweise zu der Behältervorrichtung und der weiteren Behältervorrichtung verschiebbar angeordnet sein, so dass jeweils abwechselnd ein Abbild der Auflagefläche und/oder der weiteren Ablagefläche aufgenommen werden kann.

In dem Falle, dass die Aufnahmevorrichtung nicht verfahrbar und unbeweglich angeordnet ist und somit ein unverschiebliches Arbeitsfeld aufweist, kann die Behältervorrichtung oder die weitere Behältervorrichtung derart verfahren werden, dass in der zweiten Position des jeweiligen Deckels die Auflagefläche oder die weitere Auflagefläche in dem Arbeitsfeld der Aufnahmevorrichtung zum Liegen kommt.

Ferner kann in einer beispielhaften Ausführungsform der Deckel und der weitere Deckel in einem gemeinsamer Deckel ausgebildet werden, so dass die Behältervorrichtung und die weitere Behältervorrichtung mittels des gemeinsamen Deckels geöffnet und geschlossen werden können.

Gemäß einer weiteren beispielhaften Ausführungsform des Verfahrens wird beim Befestigen Luft durch Bohrungen in den Befestigungsbereichen der Auflageflächen derart abgesaugt, dass auf den Befestigungsbereichen der Auflagefläche aufliegende Kleinteile in Grundstellung und Schwenkstellung der Behältervorrichtung befestigt werden.

Gemäß einer weiteren beispielhaften Ausführungsform des Verfahrens wird vor dem Aufnehmen zumindest eines der Kleinteile das Absaugen von Luft durch die Bohrungen gestoppt. Durch das Absaugen von Luft durch die Bohrungen besteht die Gefahr, dass aufgrund der Saugkraft die Kleinteile in einer unnatürlichen Position an den Befestigungsbereichen gehaltert werden. Indem das Absaugen von Luft vor dem Aufnehmen gestoppt wird, liegen die Kleinteile in einer ungezwungenen natürlichen Auflageposition auf der Auflagefläche auf, so dass dadurch die Wahrscheinlichkeit erhöht wird, dass zumindest eines der Kleinteile in einer gewünschten Aufnahmelage zum Liegen kommt. Dadurch wird die Effizienz des Handhabungssystems zur Vereinzelung von Kleinteilen erhöht.

Mittels der vorliegenden Erfindung wird eine Vereinzelungsbecherleiste (Behältervorrichtung) zur Handhabung bzw. Vereinzelung von kleinen, unregelmäßigen Kleinteilen (z.B. Prothesezähne), welche in einer Vielzahl als Schüttgut vorliegenden, geschaffen. Die Kleinteile werden während des Schwenk- bzw. Kippvorgangs der Behältervorrichtung von der Grundstellung in die Schwenkstellung z.B. mittels Luftabsaugung auf einer Auflagefläche des Deckels in Haftung gebracht. Anschließend wird der Deckel geöffnet, so dass die auf der Auflagefläche des Deckels aufliegenden Kleinteile über einer Lichtquelle positioniert werden. Der Deckel ist hierbei beispielsweise transparent und durchsichtig ausgebildet. Von diesen Kleinteilen wird ein Bild aufgenommen, so dass im Anschluss mittels einer Steuereinheit basierend auf dem aufgenommenen Bild der Kleinteile eine Umrisserkennung der Kleinteile zur Bestimmung von Lagedaten und Formdaten der Kleinteile durchführbar ist. Eine Aufnahmevorrichtung, z.B. ein Roboterarm, wird basierend auf den Lage-und Formdaten derart gesteuert, dass dieser gezielt ausgewählte Kleinteile aufnimmt.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung des Handhabungssystems gemäß einer beispielhaften Ausführungsform der vorliegenden Erfindung;
Fig. 2 zeigt eine schematische Darstellung des Handhabungssystems aus Fig. 1, wobei das Handhabungssystems verfahrbar entlang einer Führungsschiene gemäß einer beispielhaften Ausführungsform der vorliegenden Erfindung dargestellt ist;
Fig. 3 zeigt eine schematische Darstellung eines Handhabungssystems mit einem Behälter mit verschiedenen Kammern gemäß einer beispielhaften Ausführungsform der vorliegenden Erfindung;
Fig. 4 zeigt eine schematische Darstellung eines Deckels gemäß einer beispielhaften Ausführungsform der vorliegenden Erfindung; und
Fig. 5 zeigt eine Schnittdarstellung des Deckels aus Fig. 4 gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

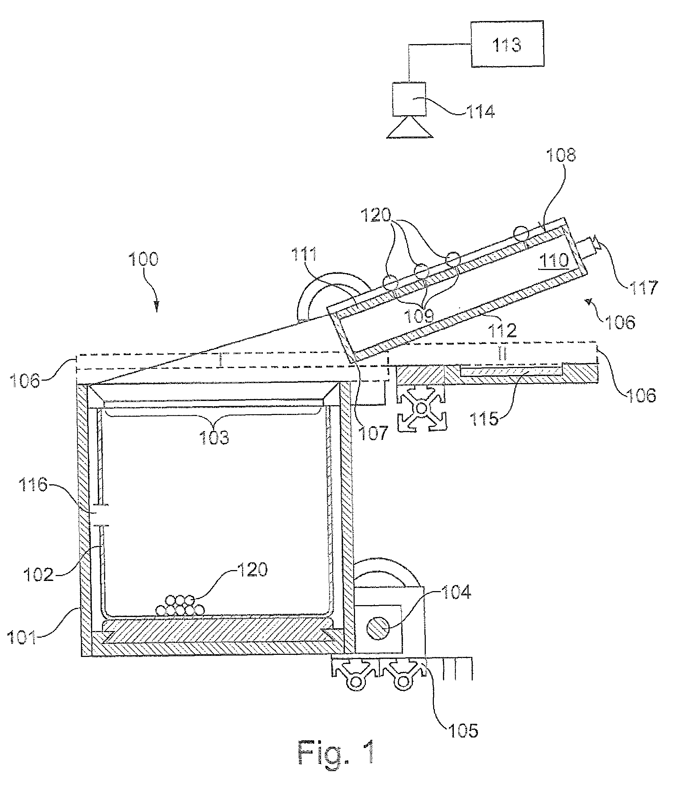

**Fig. 1** zeigt ein System zur Handhabung von Kleinteilen 120. Das System weist eine Behältervorrichtung 100 mit einer Behälteröffnung 103 und einem Deckel 106 auf. Die Behältervorrichtung 100 ist derart um eine erste Drehachse 104 schwenkbar an einem Träger 105 angeordnet, dass die Behältervorrichtung 100 aus einer Grundstellung, in welcher die Kleinteile 120 in der Behältervorrichtung 100 aufgenommen sind, in eine Schwenkstellung, in welcher die Kleinteile 120 aus der Behälteröffnung 103 herausfallen, schwenkbar ist. In Fig. 1 ist die Behältervorrichtung in der Grundstellung dargestellt.

Der Deckel 106 ist um eine zweite Drehachse 107 schwenkbar an der Behältervorrichtung 100 angeordnet. Der Deckel 106 ist zwischen einer ersten Position I, in welcher der Deckel 106 die Behälteröffnung 103 schließt und einer zweiten Position II, in welcher die Behälteröffnung 103 geöffnet ist, schwenkbar. In Fig. 1 befindet sich der Deckel 106 in einer Position zwischen der ersten Position I und der zweiten Position II.

Der Deckel 106 weist eine Auflagefläche 108 mit beabstandeten Befestigungsbereichen auf, wobei auf jeweils einem der Befestigungsbereiche ein jeweils aufliegendes Kleinteil 120 in der Grundstellung und in der Schwenkstellung der Behältervorrichtung 100 lösbar befestigbar ist. Der Deckel 106 ist derart eingerichtet, dass, wenn sich die Behältervorrichtung 100 in der Grundstellung und der Deckel 106 in der zweiten Position befinden, mittels einer Aufnahmevorrichtung zumindest eines der Kleinteile 120 von der Auflagefläche 108 aufnehmbar ist.

Von der in Fig. 1 abgebildeten Grundstellung der Behältervorrichtung 100 kann die Behältervorrichtung 100 um die erste Drehachse 104 beispielsweise um ungefähr 90° bis 180° geschwenkt werden, so dass die Kleinteile 120 auf der Auflagefläche 108 aufliegen. Die Kleinteile 120 werden an den Befestigungsbereichen auf der Auflagefläche 108 befestigt und die Behältervorrichtung 100 erneut um die erste Drehachse 104 zurück in die Grundstellung geschwenkt. Alle nicht an den Befestigungsbereichen der Auflagefläche 108 befestigten Kleinteile 120 fallen zurück in die Behältervorrichtung 100. Damit wird sichergestellt, das nicht zwei Kleinteile 120 übereinander auf der Auflagefläche 108 aufliegen, wodurch ein gezieltes Aufnehmen der Kleinteile 120 erleichtert wird.

Der Deckel 106 ist von der ersten Position I relativ zu der Behältervorrichtung 100 um die zweite Drehachse 107 in die zweite Position II schwenkbar. In dieser zweiten Position II nimmt der Deckel 106 eine vorbestimmte Position relativ zu einer Aufnahmevorrichtung ein, so dass die Aufnahmevorrichtung die Kleinteile 120 von der Auflagefläche 108 aufnehmen kann.

Zur Befestigung der Kleinteile 120 auf der Auflagefläche 108 weisen die Befestigungsbereiche in Fig. 1 Bohrungen 109 auf. Durch die Bohrungen 109 kann Luft abgesaugt werden, so dass dadurch die Kleinteile 120 an die Befestigungsbereiche der Auflagefläche 108 angesaugt werden und lösbar befestigbar sind. Die Auflagefläche 108 kann eine Vielzahl von Befestigungsbereichen, z.B. von Bohrungen 109, aufweisen, so dass eine Vielzahl von Kleinteilen 120 auf der Auflagefläche 108 gleichzeitig befestigbar ist.

Der Deckel 106 kann aus einer ersten Abdeckung 111, welche die Auflagefläche 108 enthält, und einer zweiten Abdeckung 112 gebildet werden. Innerhalb des Deckels 106 ist ein Hohlraum 110 ausgebildet, wobei die Bohrungen 109 die Umgebung der ersten Abdeckung 111 mit dem Hohlraum 110 verbinden. Ferner weist der Deckel 106 ein Anschlusselement 117 auf, mit welchem eine Fluidverbindung zu einer Luftabsaugvorrichtung herstellbar ist.

Die Behältervorrichtung 100 weist einen Behälter 102 und eine Behälterhalterung 101 auf. Die Behälterhalterung 101 und der Behälter 102 sind, wie in Fig. 1 dargestellt, z.B. mit einer Schwalbenschwanzverbindung miteinander befestigt. Der Behälter 102 kann durch einen weiteren Behälter 102 schnell ausgetauscht werden.

Der Behälter 102 weist ferner eine Belüftungsöffnung 116 auf, um einen Unterdruck innerhalb des Behälters 102 zu vermeiden. Befindet sich beispielsweise der Deckel 106 in der ersten Position I, so ist die Behälteröffnung 103 verschlossen. Bei gleichzeitiger Absaugung von Luft zur Befestigung der Kleinteile 120 auf der Auflagefläche 108 kann ein ungewünschter Unterdruck innerhalb des Behälters 102 entstehen. Die Belüftungsöffnung 116 dient als Ausgleichsöffnung, damit der ungewünschte Unterdruck innerhalb des Behälters 102 verhindert wird.

Während des Vereinzelungsvorgangs wird die mit Kleinteilen 120 befüllte Behältervorrichtung 100 an der Behälteröffnung 103 mittels des Deckels 106 verschlossen, indem der Deckel 106 in die ersten Position I geschwenkt wird. Anschließend wird die Behältervorrichtung 100 beispielsweise um ungefähr 180° in die Schwenkstellung geschwenkt, so dass die Kleinteile 120 willkürlich auf der Auflagefläche 108 des Deckels 106 zum Liegen kommen. Ferner wird Luft durch die Bohrungen 109 in den Hohlraum 110 abgesaugt, so dass in den Befestigungsbereichen die Kleinteile 120 angesaugt und lösbar bzw. temporär befestigt werden. Anschließend schwenkt sich die Behältervorrichtung 100 zurück in die Grundstellung, wobei der Deckel 106 beispielsweise um ungefähr 180° um die zweite Drehachse 107 von der ersten Position I in die zweite Position II geschwenkt wird. Die Kleinteile 120 liegen nun vereinzelt und beabstandet auf der Auflagefläche 108 auf, wenn sich der Deckel 106 in der zweiten Position II befindet.

Anschließend kann die Luftabsaugung abgeschaltet werden, damit die Kleinteile 120 auf der Auflagefläche 108 frei aufliegen und nicht länger durch die Luftabsaugung in gezwungenen Lagen ausgerichtet sind. Anschließend kann eine Aufnahmevorrichtung gezielt eines oder eine Vielzahl von den auf der Auflagefläche 108 liegenden Kleinteilen 120 aufnehmen.

In Fig. 1 wird ferner dargestellt, dass nicht alle Befestigungsbereiche mit Kleinteilen 120 belegt sein müssen.

Ferner kann zum gezielteren Aufnehmen eine Umrisserkennung und eine Lagebestimmung der Kleinteile 120 auf der Auflagefläche 108 durchgeführt werden. Eine Kamera 114 nimmt dazu ein Bild der Auflagefläche 108 einschließlich der darauf aufliegenden Kleinteile 120 auf. Von dem Bild sind beispielsweise Lagedaten und Formdaten (Umriss, 3-D-Profil) der Kleinteile 120 bestimmbar.

In Abhängigkeit der ermittelten Form und Lage der Kleinteile 120 kann gezielt mit der Aufnahmevorrichtung ein Kleinteil 120 gegriffen werden, welches einer vorgegebenen Form und einer vorgegebenen Lage auf der Auflagefläche 108 entspricht. Dazu kann eine Steuereinrichtung 113 eingesetzt werden, welche basierend auf dem von der Kamera 114 aufgenommenen Bild die Form- und Lagedaten der aufliegenden Kleinteile 120 ermittelt und daraufhin die Aufnahmevorrichtung steuert, um gezielt ein Kleinteil 120 aufzunehmen. Die Steuereinheit 113 kann hierzu mit einer Datenbank verbunden werden, welche die notwendigen Soll-Lagedaten und Soll-Formdaten zum Vergleich bereitstellt. Durch Vergleich der Soll-Daten mit den Ist-Daten wird die Möglichkeit geschaffen, gezielt ein Kleinteil aufzunehmen, welches in einer gewünschten vorbestimmten Lage aufliegt und eine bestimmte Form aufweist.

Zur Verbesserung der Qualität des Bildes und zur Verbesserung der Ermittlung der Form- und Lagedaten kann die Auflagefläche 108 mittels einer Beleuchtungsvorrichtung 115 beleuchtet werden. Die Beleuchtungsvorrichtung 115 ist in der beispielhaften Ausführungsform von Fig. 1 auf der entgegengesetzten Seite des Deckels 106 bezüglich der Auflagefläche 108 angeordnet. Um dennoch die Auflagefläche 108 zu beleuchten, sind hierbei die erste Abdeckung 111 und die zweite Abdeckung 112 transparent ausgebildet, so dass die Beleuchtungsvorrichtung 115 die Auflagefläche 108 von innen heraus beleuchtet. Aufgrund der Beleuchtung können schärfere Umrisse und exaktere Form- und Lagedaten der Kleinteile 120 ermittelt werden.

Da statistisch gesehen nur ein begrenzter Anteil der aufzunehmenden Kleinteile 120 aufnehmbar auf der Auflagefläche 108, das heißt mit der gewünschten vorbestimmten Lage, zum Liegen kommen, müssen diejenigen Kleinteile 120, die nicht aufnehmbar sind, wieder zurückgeführt werden. Hierzu wird der Deckel 106 zurück in die erste Position I um die zweite Drehachse 107 geschwenkt, so dass die Behälteröffnung 103 erneut geschlossen wird. Während dem Verschwenken des Behälterdeckels 106 um die zweite Drehachse 107 und bei Verharrens der Behältervorrichtung 100 in Grundstellung, rutschen die Kleinteile 120, welche auf der Auflagefläche 108 aufliegen, zurück in die Behältervorrichtung 100. Anschließend kann erneut die Behältervorrichtung 100 um die erste Drehachse 104 in die Schwenkstellung geschwenkt werden, so dass neu ausgerichtete Kleinteile 120 auf der Auflagefläche 108 zum Liegen kommen.

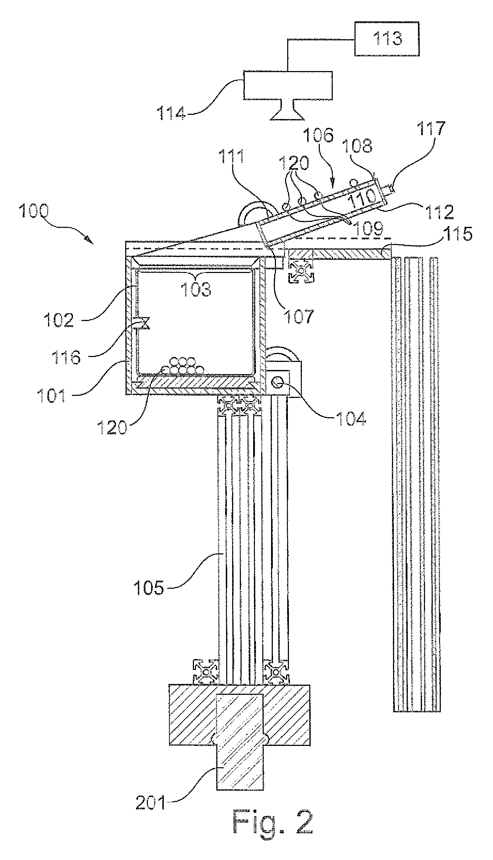

**Fig. 2** zeigt die beispielhafte Ausführungsform von Fig. 1, wobei deutlich wird, dass die Behälterhalterung 105 beispielsweise verschiebbar an einer Führungsschiene 201 befestigbar ist. Beispielsweise kann eine weitere Behältervorrichtung 100 hinter der Behältervorrichtung 100 angeordnet sein (z.B. in Axialrichtung der ersten Drehachse 104). Somit kann mittels Verschiebens des Behälterträgers 105 entlang der Führungsschiene 201 der Deckel 106 der Behältervorrichtung 100 oder ein weiterer Deckel 106 der weiteren Behältervorrichtung 100 über der Beleuchtungsvorrichtung 115 in der zweiten Position II zum Liegen kommen, so dass die Aufnahmevorrichtung die Kleinteile 120 entweder von dem Deckel 106 oder dem weiteren Deckel 106 aufnimmt.

Alternativ kann auf der Behälterhalterung 101 der Behältervorrichtung 100 eine Vielzahl von Behältern 102 hintereinander, das heißt z.B. in Richtung der ersten Drehachse 104, lösbar, beispielsweise mit einer Schwalbenschwanzverbindung, hinaufgeschoben und befestigt werden. Ist ein Behälter 102 durch wiederholte Vereinzelung von Kleinteilen 120 zu einem gewissen Maße geleert, so wird dieser von der Behälterhalterung 101 gelöst und durch einen anderen befüllten Behälter 102 auf der Behälterhalterung 101 erneut aufgeschoben.

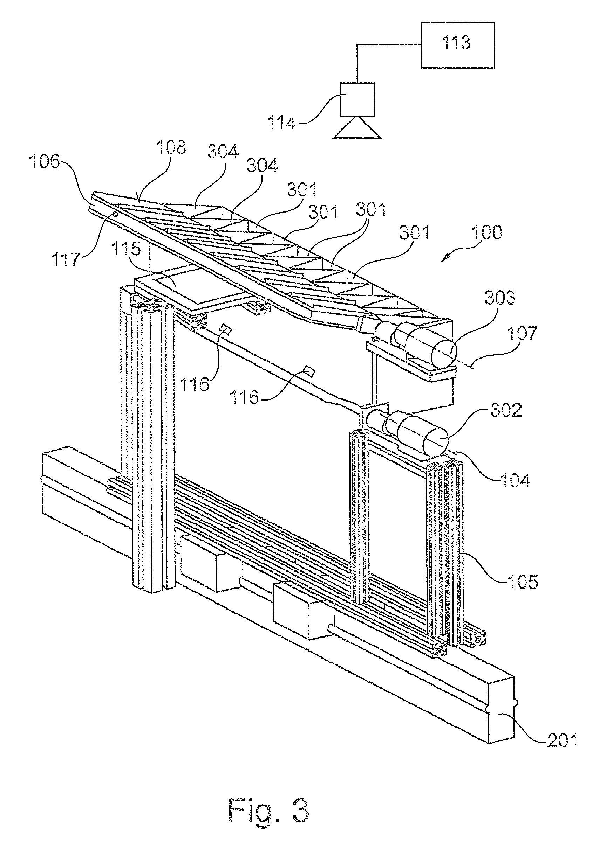

**Fig. 3** zeigt eine Behältervorrichtung 100 mit einem Behälter 102, in welchem mehrere Kammern 301 eingerichtet sind. In jede der Kammern 301 können gleiche oder unterschiedliche (erste und zweite) Kleinteile 120 vorliegen. In Fig. 3 ist der Deckel 106 derart eingerichtet, dass dieser gleichzeitig in der ersten Position alle Kammern 301 der Behältervorrichtung 100 schließt. Auf der Auflagefläche 108 des Deckels 106 können entsprechende Kleinteile 120 aus den jeweiligen Kammern 301 aufliegen und lösbar befestigt werden.

Der Behälter 102 mit der Vielzahl an Kammern 301 bildet beispielsweise eine Einheit bzw. ein Magazin für Kleinteile 120. Der Behälter 102 mit den Kammern 301 kann beispielsweise ab einem gewissen Entleerungsgrad an Kleinteilen 120 von einer Befestigungsschiene bzw. von der Behälterhalterung 101 gelöst werden und durch ein neues und frisch gefülltes Magazin bzw. durch einen neuen und frisch gefüllten Behälter 102 ersetzt werden. Dadurch werden die Rüstzeiten verkürzt. Der Wechsel des Behälters 102 kann manuell als auch maschinell bzw. selbsttätig mittels einer Austauschmaschine erfolgen.

Damit beim Rückführen der Kleinteile 120 von der Auflagefläche 108 in die jeweiligen Kammern 301 keine Vermischung zwischen den Kleinteilen 120 der unterschiedlichen Kammern 301 entsteht, sind zwischen den jeweiligen Kammern 301 Trennwände 304 vorgesehen, welche die Kleinteile 120 in die zugehörigen Kammern 301 zurückführen. Zum Schwenken der Behältervorrichtung 100 um die erste Drehachse 104 ist ein erster Antrieb 302 einsetzbar. Zum Schwenken des Deckels 106 um die zweite Drehachse 107 ist ein zweiter Antrieb 303 einsetzbar.

Die Behältervorrichtung 100 kann direkt oder indirekt über den Träger 105 mit der Führungsschiene 201 verschiebbar befestigt werden. Somit kann sich die Behältervorrichtung 100 beispielsweise relativ zu der Beleuchtungsvorrichtung 115 bewegen, so dass über der Beleuchtungsvorrichtung 115 ein bestimmter Bereich der Auflagefläche 108 des Deckels 106 zum Liegen kommt, wenn sich der Deckel 106 in der zweiten Position II befindet. In dem Bereich der Beleuchtungsvorrichtung 115 ist ein Arbeitsfeld der Aufnahmevorrichtung definiert. Mit anderen Worten kann ein bestimmter Bereich der Auflagefläche 108 über der Beleuchtungsvorrichtung 115 und im Arbeitsfeld der Aufnahmevorrichtung zum Liegen kommen. Die Beleuchtungsvorrichtung 115 und der Arbeitsbereich der Aufnahmevorrichtung müssen sich daher nicht über die gesamte Länge der Auflagefläche 108 erstrecken. Stattdessen kann die Bechervorrichtung 100 mit Hilfe z.B. eines Schlittens entlang der Führungsschiene 201 verfahren werden, so dass sich nur ein Teilbereich der Auflagefläche 108 im Arbeitsfeld der Aufnahmevorrichtung (wie beispielsweise ein Roboterarm) befindet. Nach Aufnehmen der Kleinteile 120 von dem Teilbereich wird die Behältervorrichtung 100 weiter verfahren, so dass ein weiterer Teilbereich der Auflagefläche 108 in dem Arbeitsfeld vorliegt.

Mittels der Kamera 114 wird ein Bild des Teilbereichs der Auflagefläche 108 im Arbeitsfeld einschließlich der darauf liegenden Kleinteile 120 aufgenommen. Die Steuereinheit 113 verarbeitet die Bilddaten und erzeugt durch eine Umrisserkennung Form- und Lagedaten der auf der Auflagefläche 108 liegenden Kleinteile 120. Anschließend steuert die Steuereinheit 113 die Aufnahmevorrichtung derart, dass gezielt diejenigen Kleinteile 120 von dem Bereich der Auflagefläche 108 aufgegriffen werden, welche sich in der gewünschten vorbestimmten Lage befinden.

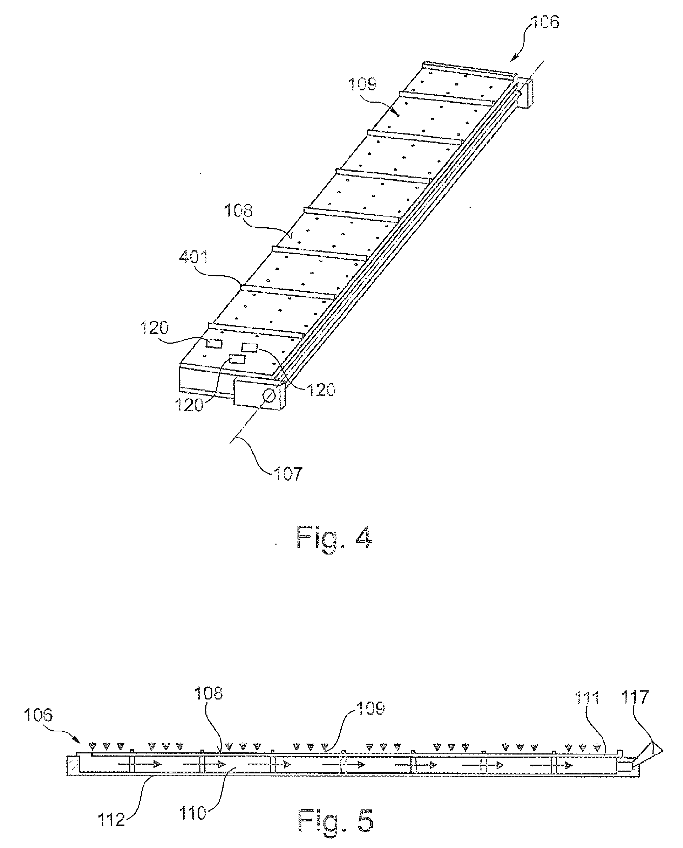

**Fig. 4** zeigt den Deckel 106, in welchem auf der Auflagefläche 108 Bohrungen 109 angeordnet sind. Der Deckel 106 ist um die zweite Drehachse 107 drehbar. Die Bohrungen 109 definieren die Befestigungsbereiche auf der Auflagefläche 108 des Deckels 106. In Fig. 4 sind teilweise Kleinteile 120 an bestimmten Bohrungen 109 lösbar befestigt. Die Bohrungen 109 sind derart beabstandet, dass Kleinteile 120, welche an benachbarten Bohrungen 109 befestigt sind, sich nicht berühren oder in Reibkontakt stehen. Der Abstand zweier Bohrungen 109 ist beispielsweise mindestens so groß wie einmal bzw. wie zweimal der größte Durchmesser der zu vereinzelnden Kleinteile 120.

Ferner weist der Deckel 106 eine Vielzahl von Trennleisten 401 auf. Die Trennleisten 401 dienen dazu, dass bei einem Zurückrutschen der auf der Auflagefläche 108 aufliegenden Kleinteile 120 diese in die zugehörigen Kammern 301 der Behältervorrichtung 100 zurückführbar sind. Die Trennleisten 401 verhindern somit einen Austausch von Kleinteilen 120 aus verschiedenen Kammern 301.

**Fig. 5** zeigt eine Schnittdarstellung des Deckels 106 aus Fig. 4. Die Pfeile in Fig. 5 zeigen eine Strömungsrichtung der abgesaugten Luft. Durch die Bohrungen 109 wird die Luft zunächst von der Auflagefläche 108 in den Hohlraum 110 abgesaugt. Die Bohrungen 109 sind in Fig. 5 der besseren Übersichtlichkeit halber nur einmal bezeichnet. Die Luft wird von dem Hohlraum 110 des Behälters 106 in Richtung eines Anschlusselements 117 abgesaugt. An dem Anschlusselement 117 kann eine Vakuumpumpe angeschlossen werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Behältervorrichtung
- 101: Behälterhalterung
- 102: Behälter
- 103: Behälteröffnung
- 104: erste Drehachse
- 105: Träger
- 106: Deckel
- 107: zweite Drehachse
- 108: Auflagefläche
- 109: Bohrung
- 110: Hohlraum
- 111: erste Abdeckung
- 112: zweite Abdeckung
- 113: Steuereinheit
- 114: Kamera
- 115: Beleuchtungsvorrichtung
- 116: Belüftungsöffnung
- 117: Anschlusselement

- 120: Kleinteil

- 201: Führungsschiene

- 301: Kammer
- 302: erster Antrieb
- 303: zweiter Antrieb
- 304: Trennwand

- 401: Trennleiste

## Patentansprüche

1. System zur Handhabung von Kleinteilen (120), wobei das System aufweist
eine Behältervorrichtung (100) mit einer Behälteröffnung (103), wobei die Behältervorrichtung (100) derart um eine erste Drehachse (104) schwenkbar angeordnet ist, dass die Behältervorrichtung (100) aus einer Grundstellung, in welcher die Kleinteile (120) in der Behältervorrichtung (100) aufgenommen sind, in eine Schwenkstellung, in welcher die Kleinteile (120) aus der Behälteröffnung (103) herausfallen, schwenkbar ist,
einen Deckel (106), welcher um eine zweite Drehachse (107) schwenkbar an der Behältervorrichtung (100) angeordnet ist, wobei der Deckel (106) zwischen einer ersten Position, in welcher der Deckel (106) die Behälteröffnung (103) schließt, und einer zweiten Position, in weicher die Behälteröffnung (103) geöffnet ist, schwenkbar ist,
wobei der Deckel (106) eine Auflagefläche (108) mit beabstandeten Befestigungsbereichen aufweist, wobei ein auf einem jeweiligen Befestigungsbereich aufliegendes Kleinteil (120) in der Grundstellung und in der Schwenkstellung der Behältervorrichtung (100) lösbar befestigbar ist, und
wobei der Deckel (106) derart eingerichtet ist, dass, wenn sich die Behältervorrichtung (100) in der Grundstellung befindet und sich der Deckel (106) in der zweiten Position befindet, mittels einer Aufnahmevorrichtung zumindest eines der Kleinteile (120) von der Auflagefläche (108) aufnehmbar ist.

2. System nach Anspruch 1,
wobei jeder der Befestigungsbereiche zumindest eine Bohrung (109) aufweist,
wobei die Bohrung (109) derart eingerichtet ist, dass Luft von der Auflagefläche (108) absaugbar ist, so dass auf der Auflagefläche (108) aufliegende Kleinteile (120) in der Grundstellung und in der Schwenkstellung der Behältervorrichtung (100) mittels Luftabsaugung befestigbar sind.

3. System nach Anspruch 2,
wobei der Deckel (106) ein Anschlusselement (117) aufweist,
wobei der Deckel (106) derart ausgebildet ist, dass eine Fluidverbindung zwischen den Bohrungen (109) und dem Anschlusselement (117) geschaffen ist, und
wobei an dem Anschlusselement (117) eine Luftabsaugvorrichtung anschließbar ist.

4. System nach Anspruch 3,
wobei der Deckel (106) einen Hohlraum (110) aufweist,
wobei der Deckel (106) derart ausgebildet ist, dass über den Hohlraum (110) die Fluidverbindung zwischen den Bohrungen (109) und dem Anschlusselement (117) erzeugbar ist.

5. System nach Anspruch 4,
wobei der Deckel (106) eine erste Abdeckung (111), welche die Auflagefläche (108) enthält, und eine zweite Abdeckung (112) aufweist, wobei die erste Abdeckung (111) und die zweite Abdeckung (112) derart angeordnet sind, dass der Hohlraum (110) zwischen der ersten Abdeckung (111) und der zweiten Abdeckung (112) geschaffen ist.

6. System nach Anspruch 5,
wobei die erste Abdeckung (111) und/oder die zweite Abdeckung (112) zumindest teilweise transparent ausgebildet sind.

7. System nach einem der Ansprüche 2 bis 6,
wobei die Bohrungen (109) in den Befestigungsbereichen der Auflagefläche (108) derart angeordnet sind, dass ein Abstand zwischen den Bohrungen (109) entlang der Auflagefläche (108) mindestens doppelt so groß wie ein größter Durchmesser eines Kleinteils (120) ist.

8. System nach einem der Ansprüche 1 bis 7, ferner aufweisend
eine Steuereinheit (113),
wobei die Steuereinheit (113) derart ausgebildet ist, dass basierend auf Bilddaten eines Bildes der Auflagefläche (108) mit den darauf liegenden Kleinteilen (120) eine Umrisserkennung der Kleinteile (120) durchführbar ist, so dass Lagedaten und Formdaten jedes einzelnen Kleinteils (120), welches auf der Auflagefläche (108) aufliegt, generierbar sind.

9. System nach einem der Ansprüche 1 bis 8, ferner aufweisend
eine Beleuchtungsvorrichtung (115), welche eingerichtet ist, die Auflagefläche (108) zu beleuchten.

10. System nach einem der Ansprüche 1 bis 9, ferner aufweisend
eine Führungsschiene (201), entlang welcher die Behältervorrichtung (100) verschieblich angeordnet ist.

11. System nach einem der Ansprüche 1 bis 10,
wobei die Behältervorrichtung (100) einen Behälter (102) und eine Behälterhalterung (101) aufweist,
wobei die Behälterhalterung (101) eingerichtet ist, den Behälter (102) lösbar zu halten, und
wobei die Behälterhalterung (101) um die erste Drehachse (104) schwenkbar angeordnet ist.

12. System nach Anspruch 11,
wobei der Behälter (102) zumindest eine Kammer (301) und eine weitere Kammer (301) aufweist,
wobei die Kammer (301) und die weitere Kammer (301) derart ausgebildet sind, dass in der ersten Kammer (301) erste Kleinteile (120) und in der weiteren Kammer (301) zweite Kleinteile (120) getrennt voneinander lagerbar sind.

13. System nach Anspruch 12,
eine Trennwand (304), welche zwischen der ersten Kammer (301) und der weiteren Kammer (301) angeordnet ist,
wobei die Trennwand (304) derart eingerichtet ist, dass bei einem Schwenken des Behälters (102) und/oder des Deckels (106) ein auf der Auflagefläche (108) liegendes erstes Kleinteil (120) in die erste Kammer (301) fällt und ein auf der weiteren Auflagefläche (108) liegendes zweites Kleinteil (120) in die weitere Kammer (301) fällt.

14. Verfahren zum Vereinzeln von Kleinteilen (120), das Verfahren aufweisend
Schwenken einer Behältervorrichtung (100), welche um eine erste Drehachse (104) schwenkbar angeordnet ist, aus einer Grundstellung, in welcher die Kleinteile (120) in der Behältervorrichtung (100) aufgenommen sind, in eine Schwenkstellung, in welcher die Kleinteile (120) aus einer Behälteröffnung (103) herausfallen,
Schwenken eines Deckels (106), welcher um eine zweite Drehachse (107) schwenkbar an der Behältervorrichtung (100) angeordnet ist, in eine erste Position, in welcher die Behälteröffnung (103) geschlossen ist, und in eine zweiten Position, in welcher die Behältervorrichtung (100) an der Behälteröffnung (103) geöffnet ist,
Befestigen eines auf einem jeweiligen Befestigungsbereich einer Auflagefläche (108) des Deckels (106) aufliegendes Kleinteil in der Grundstellung und in der Schwenkstellung der Behältervorrichtung (100), wenn sich die Behältervorrichtung (100) in der Schwenkstellung und der Deckel (106) in der ersten Position befinden, und
Aufnehmen zumindest eines der Kleinteile (120) mittels einer Aufnahmevorrichtung von der Auflagefläche (108), wenn sich die Behältervorrichtung (100) in der Grundstellung und der Deckel (106) in der zweiten Position befinden.

15. Verfahren nach Anspruch 14,
wobei das Befestigen aufweist
Absaugen von Luft durch Bohrungen (109) in den Befestigungsbereichen der Auflagefläche (108), derart, dass auf den Befestigungsbereichen der Auflagefläche (108) aufliegende Kleinteile (120) in Grundstellung und Schwenkstellung der Behältervorrichtung (100) befestigt werden, und
wobei vor dem Aufnehmen zumindest eines der Kleinteile (120) das Absaugen von Luft durch die Bohrungen (109) gestoppt wird.
